# EUROPÄISCHE PATENTSCHRIFT

(11) **EP 0 952 040 B1**
(45) Veröffentlichungstag und Bekanntmachung des Hinweises auf die Patenterteilung: **08.06.2005**
(21) Anmeldenummer: 99106869.3
(22) Anmeldetag: 07.04.1999
(51) Int. Cl.: B60R 16/02

(54) **Verfahren und Einrichtung zum Betrieb bzw. zum Bedienen verschiedener Geräte in einem Fahrzeug**
Method and device for operating different appliances in a vehicle
Procédé et dispositif pour actionner differents appareils dans un véhicule

(30) Priorität: 23.04.1998 DE 19818262
(43) Veröffentlichungstag der Anmeldung: 27.10.1999
(73) Patentinhaber: Volkswagen Aktiengesellschaft, 38436 Wolfsburg (DE)
(72) Erfinder: Crull, Torsten, 38106 Braunschweig (DE)

(56) Entgegenhaltungen:
- EP-A- 0 686 525
- DE-A- 19 608 869
- US-A- 4 827 520
- US-A- 5 450 525

## Beschreibung

Die Erfindung betrifft ein Verfahren sowie eine Einrichtung zum Betrieb bzw. zum Bedienen verschiedener Geräte in einem Fahrzeug mittels Spracheingabe, gemäß Oberbegriff der Patentansprüche 1 und 7.

Die Sprachbedienbarkeit verschiedener Geräte innerhalb eines Kraftfahrzeuges ist als solches bereits bekannt. Sie dienen dazu, den Kraftfahrer bei der Bedienung einzelner Geräte im Kraftfahrzeug dahingehend zu unterstützen, daß er, ohne die Aufmerksamkeit vom Straßenverkehr abzuwenden, Geräte auch ohne manuelle Eingriffe bedienen kann. Insofern dienen Spracheingabeeinheiten zu diesem Zweck nicht nur dem Bedienkomfort, sondern auch aus sicherheitstechnischen Aspekten.

Hierzu werden in der Regel fest vereinbarte Sprachbefehle verwendet, die dann von der bedienenden Person klar und deutlich in Richtung des erfassenden Mikrofones gesprochen werden müssen. Dabei können solche Systeme hinsichtlich der Spracherkennung wiederum adaptiv ausgelegt sein, um beispielsweise auf gewisse Charakteristika in der Stimme verschiedener Fahrer eines PKW anpassbar zu sein. Auch die Spracherkennung als solches ist bereits aus anderen technischen Bereichen bekannt und wird auch hierbei vielfältig eingesetzt.

So ist aus der EP 0686525 A 1 eine Einrichtung bekannt, welche zur Steuerung von mehreren unabhängigen Geräten in einem Kraftfahrzeug eingesetzt wird. Hierzu sind verschiedene Befehle verabredet, die der Kraftfahrer kennt, bzw. die ihm seitens des Herstellers mitgeteilt werden. Die Spracheingabeeinheit bzw. die Geräte müssen aufeinander genauestens appliziert sein, damit sie in der entsprechenden Weise auch miteinander funktionieren.

Aus der US 4827520 ist eine Spracheingabeeinheit bekannt, welche zur Steuerung verschiedener Geräte im Kraftfahrzeug eingesetzt wird. Dabei wird eine Memorieeinheit und ein Prozessor verwendet, die für den Vergleich von Befehlsworten mit abgespeicherten Befehlsworten dienen. Hierbei befaßt sich dieses Dokument lediglich mit der besagten Funktionszuweisung zwischen Memorieeinheit und -prozessor und Spracheingabeeinheit.

Aus der DE 19608869 A 1 (Oberbegriff von Anspruch 1 bzw. 7) ist eine Kombination aus sprachgesteuerter Eingabe mit manueller Unterstützung durch Betätigungsmittel bekannt, wobei die Betätigungsmittel mehrere Freiheitsgrade, wie Drehung, Zug- und Tastbetätigung, nutzen.

Aus der DE 19608869 A 1 ist ein Bediensystem umfassend eine Sprachbedieneinrichtung und ein Betätigungsmittel bekannt, wobei dem Betätigungsmittel durch die Sprachbedieneinrichtung verschiedene Bedienfunktionen zugewiesen werden und wobei das Betätigungsmittel über mehrere Verstellfreiheitsgrade verfügt, welche in Abhängigkeit von der zugewiesenen Bedienfunktion einstellbar sind.

Keines der besagten Dokumente aus dem Stand der Technik befaßt sich mit der Problematik der Verwendung verschiedener Geräte im einzelnen. Man geht immer davon aus, daß die spracheingabegesteuerten Geräte zueinander genauestens appliziert sind und somit eine sehr komplexe Einheit bilden.

Ausgehend hiervon liegt der Erfindung die Aufgabe zugrunde, ein Verfahren sowie eine Einrichtung der gattungsgemäßen Art dahingehend weiterzubilden, daß die zentrale Sprachbedieneinheit mit allen bedienfähigen Geräten, unabhängig von jeweiler Ausstattung, korrelieren kann.

Die gestellte Aufgabe ist hinsichtlich eines Verfahrens erfindungsgemäß dadurch gelöst, daß alle spracheingabegesteuerten Geräte zusammen mit mindestens einer Spracheingabe logisch miteinander kommunizierend verbunden sind, derart, daß die Funktions- und/oder Ausstattungsmerkmale jedes Gerätes von der Spracheingabeeinheit elektronisch selbsttätig abgefragt oder vom Gerät selbsttätig mitgeteilt werden.

Weitere vorteilhafte Ausgestaltungen des Verfahrens sind in den abhängigen Ansprüchen 2 bis 6 angegeben. Hinsichtlich einer Einrichtung der gattungsgemäßen Art wird die gestellte Aufgabe erfindungsgemäß durch die kennzeichnenden Merkmale des Patentanspruches 7 gelöst. Weitere vorteilhafte Ausgestaltungen hinsichtlich der erfindungsgemäßen Einrichtung sind in den übrigen abhängigen Ansprüchen angegeben.

Der Kem der Erfindung besteht darin, daß die Spracheingabe sowie alle spracheingabegesteuerten Geräte miteinander kommunizieren, d.h., beispielsweise über ein Netzwerk oder ein Bussystem verbunden sind. Dabei sollen die Funktions- und/oder Ausstattungsmerkmale jedes Gerätes von der Spracheingabeeinheit elektronisch selbsttätig abgefragt oder vom Gerät mitgeteilt werden können. D.h., das gesamte System muß nicht Gerät für Gerät aufeinander abgestimmt sein, sondern das System ist völlig offen auf jedwede Erweiterung desselben um ein weiteres Gerät.

Dies leistet der oben beschriebene Stand der Technik nicht, weil er auf bestimmte Geräte appliziert sein muß, die ein zusammenhängendes Ganzes ergeben.

Die logische Verknüpfung der einzelnen Komponenten über das Bussystem ermöglicht dabei die besagte erfindungsgemäße Abfragemöglichkeit jedes einzelnen Gerätes nach seiner Ausstattung oder seiner Funktionen. Es ist von Vorteil, wenn dabei das verwendete Protokoll auf dem Bussystem einheitlich ist. D.h., jedes einzelne Gerät sollte auf dem gleichen Protokoll sowohl die Informationen über seine Ausstattungs- und Funktionsmerkmale bereitstellen, aber auch über ein einheitliches Protokoll sollte die Bedienung über die Spracheingabeeinheit erfolgen. Weitere Bedingungen gibt es nicht. D.h., es können Geräte beliebig hinzugefügt werden; die Spracheingabeeinheit wird selbst bei einem Nachrüsten eines Gerätes, wenn dies an das Bussystem mit angeschlossen wird, selbsttätig die Funktions- und Ausstattungsmerkmale des Gerätes abfragen und dasselbe sodann automatisch zur spracheingabegesteuerten Bedienung zur Verfügung stellen.

Dies hat auch fertigungsmäßig den Vorteil, daß die Spracheingabeeinheit unabhängig von jedem Fahrzeugtyp einheitlich ist und für jede erdenkbare ausstattungsmäßige Gerätegruppe in einem jeweiligen Kraftfahrzeug sich selbsttätig anpaßt, in dem sie die einzelnen verfügbaren Geräte abfragt, oder die Geräte diese Informationen selbsttätig bereitstellt. Sind bei gewissen Ausstattungen kleinerer Kraftfahrzeuge gewisse Gerätekomponenten nicht enthalten, so werden diese natürlich auch von der Spracheingabeeinheit zur Bedienung nicht zur Verfügung gestellt.

Es kann sich bei den Geräten jedoch auch um Sensoren mit entsprechend nachgeschalteter Logik handeln, d.h., es müssen nicht ausschließlich umfangreiche Geräte wie Autoradio oder gleichergleichen sein. Beispielsweise können Bordcomputer verwendet werden, die abhängig von der Ausstattung eines Kraftfahrzeuges mehr oder weniger Funktionen bereitstellen. Wie viele Funktionen der einzelne jeweilige Bordcomputer eines Kraftfahrzeuges hat, fragt die standardisierte Spracheingabeeinheit nach dem Einbau selbsttätig ab. Steht also beispielsweise eine Messung der Außentemperatur zur Verfügung, so kann diese nach Fertigstellung und Inbetriebnahme des Fahrzeuges vom Kraftfahrzeugführer auch abgerufen werden. Steht diese nicht zur Verfügung, und er benutzt beispielsweise das standardisierte Befehlswort Außentemperatur" so kann ihm die Spracheingabeeinheit mitteilen, ob dieses Ausstattungsmerkmal in seinem Kraftfahrzeug vorhanden ist oder nicht.

In vorteilhafter Ausgestaltung des erfindungsgemäßen Verfahrens werden die jeweiligen gerätebezogenen Funktions- und/oder Ausstattungsmerkmale die zuvor in den Geräten abgespeichert sind sodann in der Spracheingabeeinheit abgespeichert und zur sprachgesteuerten Bedienung bereit gestellt, in der oben beschriebenen Weise.

In weiterer Ausgestaltung wird, wie oben bereits ausgeführt, die abgefragte Information über die Funktions- und/oder Ausstattungsmerkmale aller Geräte mit Hilfe eines einheitlichen Protokolls übermittelt. Die Spracheingabeeinheit als solches wird mit einem standardisierten Befehlssatz bedient, der zuvor verabredet und vom Hersteller oder Händler mitgeteilt wird oder werden kann.

Bei Nichtvorhandensein einer Funktion eines Gerätes oder einer Funktion generell kann die Nichtausführbarkeit durch optisches und/oder akustisches Signal, was auch Sprachsignal heißen kann, gemeldet werden. Dies in der oben beschriebenen Weise.

Nach einer weiteren vorteilhaften Ausführung ist außerdem vorgesehen, daß einzelne Sondergeräte auch bestimmte gerätespezifische Sprachbefehle aufweisen können. Diese gerätespezifischen Sprachbefehle werden beispielsweise nach dem Einbau des Gerätes von der Spracheingabeeinheit elektronisch selbsttätig abgefragt bzw. vom jeweiligen Gerät dieser selbsttätig mitgeteilt.

Die Erfindung ist in der Zeichnung dargestellt und nachfolgend näher beschrieben.

Es zeigt:
- Figur 1:: Logische Anordnung der einzelnen Elemente.
- Figur 2:: Anordnung der Geräte auf einer Ringbusleitung.

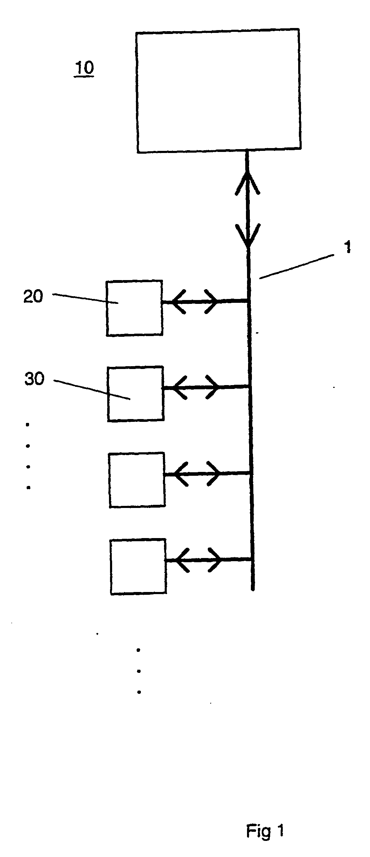

Figur 1 zeigt die prinzipielle Funktionsweise der erfindungsgemäß gesteuerten Spracheingabe in Verbindung mit mehreren zu steuernden Geräten.

Die Spracheingabeeinheit 10 ist mit einer Logikeinheit versehen, deren Funktion nachfolgend noch näher beschrieben wird. Die besagte Logikeinheit ist dabei in die Spracheingabeeinheit mit integriert.

Am Ausgang der Spracheingabeeinheit ist eine Informationsleitung, beispielsweise in Form einer Busleitung, welche in das Fahrzeuginnere zu den einzelnen Geräten führt und hinsichtlich ihrer Arbeitsweise bidirektional ausgelegt ist. Diese bidirektionale Busleitung 1 kann entweder eine beliebig fortgesetzte Leitung sein, an welche die einzelnen Geräte 20, 30 usw. angehängt sind, es kann jedoch aus zweckmäßigen Gründen auch eine Ringbusleitung sein, um beispielsweise eine einfachere Nachrüstung von Geräten zu ermöglichen. Wichtig ist dabei der direktionale Betrieb der besagten Busleitung, weil über die Spracheingabeeinheit mit der verbundenen nachgeschalteten Logikeinheit die einzelnen Befehle nicht nur an die einzelnen Geräte weitergegeben werden, sondern die Geräte sollen auch in umgekehrter Richtung mit der Logikeinheit bzw. der Spracheingabeeinheit 10 korrespondieren.

Diese Korrespondenz bezieht sich auf die erfindungsgemäße Verfahrensweise, nämlich, daß die sprachgesteuerte Eingabeeinheit 10 die Funktions- und/oder Ausstattungsmerkmale jedes einzelnen Gerätes von demselben elektronisch und selbsttätig abfragt oder von den Geräten selbsttätig d.h. ohne Abfrage automatisch mitgeteilt. Wird nun ein Gerät addiert, so kommt es zwischen der Spracheingabeeinheit 10 und dem entsprechend addierten Gerät zu einer logischen Kopplung, die selbsttätig abläuft. Die Spracheingabeeinheit 10 soll die Erweiterung eines weiteren Gerätes erkennen und sodann die entsprechenden Funktions- und/oder Ausstattungsmerkmale desselben abfragen können. Über diese Information erhält die Spracheingabeeinheit 10 automatisch sämtliche verfügbaren Einzelfunktionen des Gerätes, die sodann dem Bediener zur Verfügung stehen.

Hierzu ist es vorteilhaft, wenn die Spracheingabeeinheit selbsttätig die Addressierung der einzelnen Geräte, d.h., auch der erweiterten Geräte, selbsttätig vornimmt. Da es sich bei der Busleitung 1 um eine gemeinsame Informationsleitung für alle Geräte handelt, heißt dies natürlich, daß die Korrespondenz sowohl in Informationsrichtung vom Gerät zur Spracheingabeeinheit sowie auch in Kommandorichtung von Spracheingabeeinheit zum Gerät adressiert erfolgen muß, damit jedes entsprechende Gerät weiß, wann es angesprochen ist.

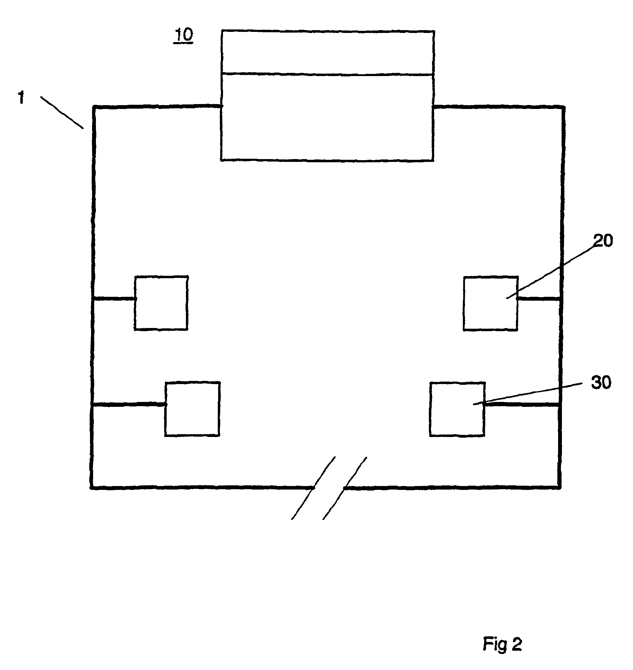

Figur 2 zeigt in einem Beispiel eine ringförmige Busleitung, die zumeist praktischer ist. Diese Busleitung 1 kann innerhalb des Kraftfahrzeuges bereits vorverlegt sein und überall dort vorbeigeführt werden, wo Einbauschächte für Geräte oder Sensoren vorhanden oder vorgesehen sind. Die informationsmäßige elektrische Kopplung des jeweiligen Gerätes mit der Busleitung 1 kann dabei über sogenannte Schneidklemmenkontaktierung erfolgen. Auch hierbei ist der Informationsfluß bzw. der Betrieb der Busleitung bidirektional.

Alles in allem kann jedoch ein optisches Bussystem auch von Vorteil sein.

Die Spracheingabeeinheit 10 mit entsprechender Logikeinheit kann dabei auch Speichermittel umfassen, welche zum einen die gerätetypischen Befehle enthält und ggf. auch die Korrelation zur Spracherkennung durchführt, um die besagten Befehle auch als gesprochene Befehle erkennen zu können.

## Patentansprüche

1. Verfahren zum Betrieb bzw. zum Bedienen verschiedener Geräte in einem Kraftfahrzeug mittels Spracheingabe, wobei alle spracheingabegesteuerten Geräte (20, 30) zusammen mit mindestens einer Spracheingabeeinheit (10) logisch miteinander kommunizierend verbunden sind, **dadurch gekennzeichnet, daß** die Funktions- und/oder Ausstattungsmerkmale jedes Gerätes (20, 30) von der Spracheingabeeinheit (10) elektronisch selbsttätig abgefragt bzw. vom jeweiligen Gerät (20, 30) selbsttätig mitgeteilt werden.

2. Verfahren zum Betrieb bzw. zum Bedienen verschiedener Geräte in einem Kraftfahrzeug nach Anspruch 1,
**dadurch gekennzeichnet,**
**daß** die jeweiligen gerätebezogenen Funktions- und/oder Ausstattungsmerkmale in der Spracheingabeeinheit (10) abgespeichert und zur sprachgesteuerten Bedienung bereitgestellt werden.

3. Verfahren zum Betrieb bzw. zum Bedienen verschiedener Geräte in einem Kraftfahrzeug nach Anspruch 2,
**dadurch gekennzeichnet,**
**daß** die abgefragten Funktions- und/oder Ausstattungsmerkmale aller Geräte (20, 30) mit Hilfe eines einheitlichen Protokolls übermittelt werden.

4. Verfahren zum Betrieb bzw. zum Bedienen verschiedener Geräte in einem Kraftfahrzeug nach einem oder mehreren der vorhergehenden Ansprüche,
**dadurch gekennzeichnet,**
**daß** die Spracheingabeeinheit (10) mit einem standardisierten Befehlssatz bedient wird.

5. Verfahren zum Betrieb bzw. zum Bedienen verschiedener Geräte in einem Kraftfahrzeug nach einem oder mehreren der vorhergehenden Ansprüche,
**dadurch gekennzeichnet,**
**daß** bei Nichtvorhandensein einer Funktion eines Gerätes (20, 30) oder einer Funktion generell, die Nichtausführbarkeit durch optisches und/oder akustisches Signal gemeldet wird.

6. Verfahren zum Betrieb bzw. zum Bedienen verschiedener Geräte in einem Kraftfahrzeug nach einem oder mehreren der vorhergehenden Ansprüche,
**dadurch gekennzeichnet,**
**daß** eines oder mehrere der Geräte (20, 30) gerätespezifische Sprachbefehle aufweist und die Sprachbefehle der Geräte von der Spracheingabeeinheit (10) elektronisch selbsttätig abgefragt bzw. vom jeweiligen Gerät (20, 30) selbsttätig mitgeteilt werden.

7. Einrichtung zum Betrieb bzw. zum Bedienen verschiedener Geräte in einem Kraftfahrzeug, wobei innerhalb des Kraftfahrzeuges ein Netzwerk oder eine Busleitung (1) angelegt ist, welche mit einer Spracheingabeeinheit (10) verbunden ist, und daß an das Netzwerk bzw. die Busleitung (1) einzelne Geräte (20, 30) anschließbar sind, wobei der signalmäßige Betrieb zwischen jeweiligem Gerät (20, 30) und der Spracheingabeeinheit (10) bidirektional ausgelegt ist, **dadurch gekennzeichnet, daß** Funktions- und/oder Ausstattungsmerkmale der Geräte (20, 30) von der Spracheingabeeinheit (10) elektronisch selbsttätig abgefragt bzw. vom jeweiligen Gerät (20, 30) selbsttätig mitgeteilt werden.

8. Einrichtung zum Betrieb bzw. zum Bedienen verschiedener Geräte in einem Kraftfahrzeug nach Anspruch 7,
**dadurch gekennzeichnet,**
**daß** die besagte logische Verknüpfung eines Busleitung (1) ist.

9. Einrichtung zum Betrieb bzw. zum Bedienen verschiedener Geräte in einen Kraftfahrzeug nach Anspruch 7,
**dadurch gekennzeichnet,**
**daß** die Signalleitung eine Ringbusleitung (1) ist.

10. Einrichtung zum Betrieb bzw. zum Bedienen verschiedener Geräte in einem Kraftfahrzeug nach einem oder mehreren der vorhergehenden Ansprüche 7 bis 9,
**dadurch gekennzeichnet,**
**daß** die Spracheingabeeinheit (10) auch eine Logikeinheit mit Speichermedium enthält.

11. Einrichtung zum Betrieb bzw. zum Bedienen verschiedener Geräte in einem Kraftfahrzeug, nach einem oder mehreren der vorhergehenden Ansprüche 7 bis 10,
**dadurch gekennzeichnet,**
**daß** innerhalb der Logikeinheit der Spracheingabeeinheit (10) eine automatische Adressierung der einzelnen an die Busleitung (1) angeschlossenen Geräte (20, 30) vomehmbar ist, so daß die sprachgesteuerten Befehle gerätespezifisch adressiert auf die Busleitung (1), gebbar sind.

## Claims

1. Method for operating various devices in a motor vehicle by means of voice input, all of the devices (20, 30) controlled by voice input, together with at least one voice-input unit (10), being logically linked to one another in a communicating fashion, **characterized in that** the function and/or equipment features of each device (20, 30) are automatically interrogated electronically by the voice-input unit (10) or automatically communicated by the respective device (20, 30).

2. Method for operating various devices in a motor vehicle according to Claim 1, **characterized in that** the respective equipment-specific function and/or equipment features are stored in the voice-input unit (10) and provided for voice-controlled operation.

3. Method for operating various devices in a motor vehicle according to Claim 2, **characterized in that** the interrogated function and/or equipment features of all of the devices (20, 30) are transmitted using a uniform protocol.

4. Method for operating various devices in a motor vehicle according to one or more of the preceding claims, **characterized in that** the voice-input unit (10) is operated using a standardized instruction set.

5. Method for operating various devices in a motor vehicle according to one or more of the preceding claims, **characterized in that** if a function of a device (20, 30) or a function in general is not present, the inability to execute the said function is signalled by a visual and/or audible signal.

6. Method for operating various devices in a motor vehicle according to one or more of the preceding claims, **characterized in that** one or more of the devices (20, 30) has equipment-specific voice instructions, and the voice instructions of the devices are automatically interrogated electronically by the voice-input unit (10) or automatically communicated by the respective device (20, 30).

7. Apparatus for operating various devices in a motor vehicle, a network or a bus line (1), which is connected to a voice-input unit (10), being set up within the motor vehicle and it being possible to connect individual devices (20, 30) to the network or to the bus line (1), the signalling operation being designed to be bidirectional between the respective device (20, 30) and the voice-input unit (10), **characterized in that** function and/or equipment features of the devices (20, 30) are automatically interrogated electronically by the voice-input unit (10) or automatically communicated by the respective device (20, 30).

8. Apparatus for operating various devices in a motor vehicle according to Claim 7, **characterized in that** the said logical linking system is a bus line (1).

9. Apparatus for operating various devices in a motor vehicle according to Claim 7, **characterized in that** the signal line is a ring bus line (1).

10. Apparatus for operating various devices in a motor vehicle according to one or more of the preceding Claims 7 to 9, **characterized in that** the voice-input unit (10) also contains a logic unit having a storage medium.

11. Apparatus for operating various devices in a motor vehicle according to one or more of the preceding Claims 7 to 10, **characterized in that** the individual devices (20, 30) which are connected to the bus line (1) can be automatically addressed within the logic unit of the voice-input unit (10) so that the voice-controlled instructions can be transmitted onto the bus line (1) with equipment-specific addressing.

## Revendications

1. Procédé pour actionner différents appareils d'un véhicule automobile par commande vocale, dans lequel tous les appareils (20, 30) à commande vocale sont reliés logiquement à au moins une unité de commande vocale (10) de manière à communiquer mutuellement, **caractérisé en ce que** chaque appareil (20, 30) est interrogé électroniquement et automatiquement par l'unité de commande vocale (10) sur ses caractéristiques de fonctionnement et/ou d'installation et **en ce que** chaque appareil (20, 30) communique ces caractéristiques automatiquement.

2. Procédé pour actionner différents appareils d'un véhicule automobile selon la revendication 1, **caractérisé en ce que** les caractéristiques de fonctionnement et/ou d'installation de chaque appareil sont conservées en mémoire dans l'unité de commande vocale (10) et sont disponibles pour l'utilisation par la commande vocale.

3. Procédé pour actionner différents appareils d'un véhicule automobile selon la revendication 2, **caractérisé en ce que** les caractéristiques de fonctionnement et/ou d'installation de tous les appareils (20, 30) qui font l'objet d'une interrogation sont transmises à l'aide d'un protocole unique.

4. Procédé pour actionner différents appareils d'un véhicule automobile selon l'une ou plusieurs des revendications précédentes, **caractérisé en ce que** l'unité de commande vocale (10) est utilisée au moyen d'un ensemble d'ordres normalisé.

5. Procédé pour actionner différents appareils d'un véhicule automobile selon l'une ou plusieurs des revendications précédentes, **caractérisé en ce que** si une fonction d'un appareil (20, 30) ou, de manière générale, une fonction n'est pas disponible, l'impossibilité d'exécution est annoncée par un signal optique et/ou acoustique.

6. Procédé pour actionner différents appareils d'un véhicule automobile selon l'une ou plusieurs des revendications précédentes, **caractérisé en ce qu'**un ou plusieurs des appareils (20, 30) présentent des ordres vocaux spécifiques, ceux-ci étant demandés électroniquement et automatiquement par l'unité de commande vocale (10) ou communiqués automatiquement par chacun des appareils (20, 30).

7. Dispositif pour actionner différents appareils d'un véhicule automobile, dans lequel un réseau ou un bus (1) sont installés dans le véhicule automobile et sont reliés à une unité de commande vocale (10) et dans lequel différents appareils (20, 30) peuvent être raccordés au réseau ou au bus (1), l'actionnement par signaux étant conçu bidirectionnel entre chaque appareil (20, 30) et l'unité de commande vocale (10), **caractérisé en ce que** les appareils (20, 30) sont interrogés électroniquement et automatiquement par l'unité de commande vocale (10) sur leurs caractéristiques de fonctionnement et/ou d'installation ou chaque appareil (20, 30) communique celles-ci automatiquement.

8. Dispositif pour actionner différents appareils d'un véhicule automobile selon la revendication 7, **caractérisé en ce que** ladite liaison logique est un bus (1).

9. Dispositif pour actionner différents appareils d'un véhicule automobile selon la revendication 7, **caractérisé en ce que** le conducteur de signaux est un bus en boucle (1).

10. Dispositif pour actionner différents appareils d'un véhicule automobile selon l'une ou plusieurs des revendications précédentes 7 à 9, **caractérisé en ce que** l'unité de commande vocale (10) comprend également une unité logique dotée d'une mémoire.

11. Dispositif pour actionner différents appareils d'un véhicule automobile selon l'une ou plusieurs des revendications précédentes 7 à 10, **caractérisé en ce que** de manière à pouvoir adresser les ordres à commande vocale à des appareils spécifiques sur le bus (1), un adressage des différents appareils (20, 30) raccordés au bus (1) peut être effectué dans l'unité logique de l'unité de commande vocale (10).
